# EUROPÄISCHE PATENTSCHRIFT

(11) **EP 1 636 428 B1**
(45) Veröffentlichungstag und Bekanntmachung des Hinweises auf die Patenterteilung: **15.08.2007**
(21) Anmeldenummer: 04739992.8
(22) Anmeldetag: 17.06.2004
(51) Int. Cl.: E01H 10/00, E01C 19/20, A01C 17/00

(54) **Verfahren und Vorrichtung zur Verteilung von Streugut**
Method and device for distributing material that is to be spread
Procédé et dispositif d'épandage de matière d'épandage

(30) Priorität: 23.06.2003 DE 10328116
(43) Veröffentlichungstag der Anmeldung: 22.03.2006
(73) Patentinhaber: Küpper-Weisser GmbH, D-78199 Bräunlingen (DE)
(72) Erfinder: SEIDL, Richard-Peter, 78166 Donaueschingen (DE)
(74) Vertreter: Klunker . Schmitt-Nilson . Hirsch
(86) Internationale Anmeldenummer: PCT/EP2004/006533
(87) Internationale Veröffentlichungsnummer: WO 2005/001208

(56) Entgegenhaltungen:
- EP-A- 0 563 805
- GB-A- 990 177
- US-A- 3 951 312

## Beschreibung

Die Erfindung betrifft ein Verfahren und eine Vorrichtung zur Verteilung von Streugut mittels eines rotierenden, translatorisch bewegten Streutellers zur Erzeugung eines Streuteppichs, insbesondere zur Verteilung von mit Sole vermengtem Streusalz. Obwohl die Erfindung nachfolgend im Zusammenhang mit der Streusalzverteilung im Winterdiensteinsatz beschrieben wird, ist sie auf diesen Einsatz nicht beschränkt. Auch andersartiges Streugut lässt sich vorteilhaft mit der nachfolgend erläuterten Erfindung ausstreuen.

Beim Streuen bewegt sich das Streufahrzeug mit einer Geschwindigkeit v fort, während der Streuteller mit einer Drehzahl n_{T} dreht. Die Drehzahl n_{T} bestimmt die Streubreite b des mittels des Streutellers ausgestreuten Streuteppichs. Die Streudichte S_{D} des Streuteppichs wird abhängig von der Streubreite b und der Geschwindigkeit v durch die dem Streuteller pro Zeiteinheit zugeführte Streumenge Q eingestellt. Die Streumenge (pro Zeiteinheit) ergibt sich dann zu Q=b × v × S_{D}.

Um bei erhöhter Fahrgeschwindigkeit v dieselbe Streudichte S_{D} bei unveränderter Streubreite b zu erzielen, wurde entsprechend der vorstehenden Gleichung bisher lediglich die Streumenge Q variiert. Über die Berücksichtigung anderer Einflußfaktoren zur Erzielung eines idealen Streuteppichs ist wenig bekannt. Die meisten Änderungsvorschläge beziehen sich auf die konstruktive Ausgestaltung des Streutellers (DE 40 39 795 C1, DE 100 43 463 A1) oder auf Art oder Ort der Zuführung des Streusalzes und der Sole zum Streuteller (DE 393 76 75 C2, DE 44 29 188 A1). Welchen Einfluß die Fahrtgeschwindigkeit auf den Streuteppich hat, insbesondere auf die Streubreite b und die relative Lage zur Fahrzeuglängsachse, blieb bisher ein der Praxis ohne Berücksichtigung.

In der EP 0 563 805 A1 wird vorgeschlagen, bei Erhöhung der Fahrgeschwindigkeit die Streutellerdrehzahl zu reduzieren und gleichzeitig den Auftreffpunkt des Streustoffs auf dem Streuteller in der Weise zu verandern, dass der Streustoff dem Streuteller später verlässt.

Aufgabe der vorliegenden Erfindung ist es, ein Verfahren und eine Vorrichtung vorzuschlagen, mit der der Streuteppich, insbesondere nach Breite und Lage, auch bei unterschiedlichsten Fahrgeschwindigkeiten möglichst vorhersehbar und ideal einstellbar ist.
Demzufolge wird erfindungsgemäß vorgeschlagen, die Drehzahl n_{T} mit zunehmender Fahrgeschwindigkeit v zu erhöhen, um die gewünschte Streubreite b aufrechtzuerhalten. Das heißt, die Streubreite b ist nicht mehr eine lineare Funktion der Streutellerdrehzahl n_{T}, sondern hängt vielmehr auch von der Fahrgeschwindigkeit v ab.

Der Grund für diese Abhängigkeit wird in dem der Fa hrgeschwindigkeit v entsprechenden Gegenwind vermutet, der das Streugut erfasst, sobald es den Streuteller verlassen hat. Der den Streuteller verlassende Streugutfächer wird dadurch zu Lasten der Streubreite gebündelt. Dieser Effekt lässt sich beispielsweise auf mehrspurigen Autobahnen feststellen, die nach-herkömmlichen Verfahren von der rechten Fahrspur aus über die gesamte Fahrbahnbreite bestreut werden, bei denen also die Streutellerdrehzahl n_{T} zur Erzeugung einer gewünschten Streubreite nicht von der Fahrgeschwindigkeit v abhängig ist. Dort bleibt häufig die linke Fahrspur verschneit, was vermutlich daran liegt, dass der Streugutfächer diese Fahrspur nicht erreicht.

Vorzugsweise wird die Erhöhung der Drehzahl n_{T} mit steigender Fahrgeschwindigkeit um so geringer eingestellt, je höher die Streudichte s_{D} des auszustreuenden Streuteppichs ist. Versuche haben nämlich gezeigt, dass die Fokussierung des Streufächers durch den Gegenwind um so geringer ausfällt, je höher die Streudichte s_{D} ist, das heißt, je mehr Streugut pro bestreuter Fläche ausgestreut wird. Es wird vermutet, dass dieser Effekt darauf zurückzuführen ist, dass die große Anzahl der vom Streuteller abgeschleuderten Streugutagglomerate dem Gegenwind relativ weniger Angriffsfläche bieten als einzelne, in der Luft weit voneinander entfernte Streugutagglomerate.

Es wurde desweiteren beobachtet, dass eine Veränderung der Streudichte S_{D} einen Einfluss auf die Streubreite b auch bei unveränderter Fahrgeschwindigkeit besitzt, dass nämlich allein durch Erhöhen der Streudichte S_{D} eine Verbreiterung des Streuteppichs eintritt. Es ist daher grundsätzlich sinnvoll, zur Einhaltung der gewünschten Streubreite b die Streutellerdrehzahl n_{T} mit zunehmender Streudichte s_{D} zu reduzieren. Auch dieser Effekt wird auf die - relativ zur Streugutmenge - geringere Angriffsfläche vieler Streugutagglomerate gegenüber einzelnen, in der Luft weit voneinander entfernten Streugutagglomeraten zurückgeführt. Es hat sich aber herausgestellt, dass dieser Effekt zusätzlich durch die Fahrgeschwindigkeit beeinflusst wird. Verändert sich die Streubreite b bei Erhöhung der Streudichte s_{D} beispielsweise um Δ b₁ = 2 m für eine erste Fahrgeschwindigkeit v₁, so kann der Änderungswert Δ b₂ wesentlich größer sein (Δ b₂ > Δ b₁), wenn die Streudichte s_{D} bei einer zweiten, darüber liegenden Fahrgschwindigkeit v₂ um dasselbe Maß erhöht wird. Dieses Phänomen ist auf die vorerwähnte, mit der Fahrgeschwindigkeit v zunehmende Streugutfächerfokussierung zurückzuführen, welche sich auf geringe Streudichten S_{D} stärker auswirkt als auf größere Streudichten S_{D}.

Es sind somit zwei Phänomene zu beobachten, indem einerseits bei Erhöhung der Fahrgeschwindigkeit v die Streutellerdrehzahl n_{T} erhöht werden muss, um den Streugutfächer wieder auf die gewünschte Streubreite b aufzuweiten, wobei die Erhöhung um so geringer ausfällt, je höher die Streudichte s_{D} ist, und indem andererseits mit sinkender Streudichte s_{D} die Streutellerdrehzahl n_{T} erhöht werden muss, um bei im übrigen konstanter Fahrgeschwindigkeit v die Streubreite b aufrecht zu erhalten, wobei wegen der Streugutfächerfokussierung die Erhöhung um so stärker ist, je höher die Fahrgeschwindigkeit v ist. Je nachdem, welcher Einfluss stärker ist (steigende Fahrgeschwindigkeit v oder steigende Streudichte s_{D}) kann insgesamt eine Erhöhung oder eine Reduzierung der Streutellerdrehzahl notwendig sein. Die beiden Phänomene können sich aber auch gegenseitig verstärken: wenn nämlich die Fahrgeschwindigkeit v steigt und die Streudichte s_{D} sinkt, dann muß die Streutellerdrehzahl n_{T} umso mehr erhöht werden, bzw. umgekehrt.

Ist die ideale Drehzahl n_{T} einmal ermittelt, so wird es weiter bevorzugt, den Abwurfwinkel des Streuguts vom Streuteller abhängig von der so ermittelten Drehzahl n_{T} zu verändern. Es hat sich nämlich herausgestellt, dass der Abwurf des Streuguts vom Streuteller um so später erfolgt, je niedriger die Drehzahl n_{T} ist. Dies wird darauf zurückgeführt, dass bei einer relativ kleinen Drehzahl n_{T} eine entsprechend geringere Fliehkraft auf den Streustoff wirkt, so dass er länger auf dem Drehteller verweilt und dementsprechend später abgeworfen wird. Diese längere Verweildauer führt daher bei im übrigen konstanter pro Zeiteinheit ausgestreuter Streumenge Q zur Verlagerung des Streuteppichs abhängig von der Drehtellerdrehzahl n_{T}.

Betrachtet man beispielsweise einen Drehteller, der in Draufsicht im Uhrzeigersinn dreht und nimmt man des weiteren einen rechtsbündig zum Fahrbahnrand gestreuten Streuteppich an, so verlagert sich dieser Streuteppich bei steigender Drehzahl n_{T} nach rechts über den Fahrbahnrand hinaus. Diese Problematik stellt sich somit immer dann, wenn die Streutellerdrehzahl n_{T} wegen einer Erhöhung der Fahrgeschwindigkeit v erfindungsgemäß erhöht wird.

Ein ähnlicher Effekt konnte bei der pro Zeiteinheit verstreuten Streumenge Q beobachtet werden. Je größer die Streumenge Q ist, desto früher wird das Streugut vom Streuteller abgeworfen, wodurch sich der Streuteppich bei dem zuvor erläuterten Beispiel in Fahrtrichtung nach rechts über den Fahrbahnrand hinaus verlagert. Da die Streumenge Q bei erhöhter Fahrgeschwindigkeit v automatisch erhöht wird, um mit derselben Streudichte S_{D} weiter zu streuen, stellt sich dieses Problem mit sich ändernder Fahrgeschwindigkeit v ein. Daher wird gemäß einer weiter bevorzugten Ausgestaltung der Erfindung der Abwurfwinkel des Streuguts.vom Streuteller ebenfalls abhängig von der Geschwindigkeit v verändert. Mit sich erhöhender Fahrgeschwindigkeit v und rechtsbündigem Streuen mittels eines in Draufsicht betrachtet im Uhrzeigersinn drehenden Drehtellers wird der Abwurfwinkel des Streuguts daher im Uhrzeigersinn verändert, bis der rechte Rand des ausgestreuten Streuteppichs wieder nach links bis zum rechten Fahrbahnrand zurückgeführt ist.

Die Veränderung des Abwurfwinkels kann auf zwei Weisen erfolgen, die gegebenenfalls auch miteinander kombiniert werden können, wobei beide Maßnahmen auch gegenläufig sein können, sofern die Änderung des Abwurfwinkels im Endergebnis das notwendige Maß erreicht.

Gemäß der ersten Alternative zur Änderung des Abwurfwinkels wird der gesamte Streukopf um einen entsprechenden Winkel verdreht. Unter Streukopf wird fachmännisch der Streuteller einschließlich der Zuführeinrichtung zum Zuführen des Streuguts zum Streuteller, in der Regel ein Fallrohr oder eine Rutsche, verstanden.

Gemäß der zweiten Alternative zur Änderung des Abwurfwinkels wird ein dem Streuteller mit dem Streugut zugeführter Flüssigkeitsanteil verändert. Bei der Flüssigkeit handelt es sich beispielsweise um die zusammen mit Streusalz ausbrachte Sole. Ein erhöhter Flüssigkeitsanteil hat zur Folge, dass das Streugut den Streuteller früher verlässt, dass also der Abwurfwinkel in Rotationsrichtung des Streutellers betrachtet vorverlagert wird. Wenn sich also die Fa hrgeschwindigkeit v erhöht und sich dadurch wegen der erfindungsgemäß veränderten Streutellerdrehzahl n_{T} und zur Aufrechterhaltung der Streudichte S_{D} die pro Zeiteinheit ausgestreute Streumenge Q verändert, wodurch sich jeweils auch der Abwurfwinkel des Streuguts vom Streuteller verändert, so kann dieser veränderte Abwurfwinkel durch Reduzierung des zugeführten Flüssigkeitsanteils ausgeglichen werden.

## Patentansprüche

1. Verfahren zur Verteilung von Streugut mittels eines mit der Drehzahl n_{T} rotierenden und mit der Geschwindigkeit v translatorisch bewegten Streutellers zur Erzeugung eines Streuteppichs mit Streudichte s_{D} und Streubreite b, wobei mit zunehmender Geschwindigkeit v die dem Streuteller pro Zeiteinheit zugeführte Streumenge Q zur Aufrechterhaltung der Streudichte s_{D} erhöht wird, **dadurch gekennzeichnet, dass** mit der zunehmenden Geschwindigkeit v auch die Drehzahl n_{T} des Streutellers in dem Maße erhöht wird, dass die Streubreite b aufrechterhalten bleibt.

2. Verfahren nach Anspruch 1, wobei die Erhöhung der Drehzahl n_{τ} mit zunehmender Geschwindigkeit v um so geringer ist, je höher die Streudichte S_{D} ist.

3. Verfahren nach Anspruch 1 oder 2, **dadurch gekennzeichnet, dass** die Drehzahl n_{T} mit abnehmender Streudichte S_{D} bei im übrigen konstanter Geschwindigkeit v erhöht wird, um die Streubreite b aufrecht zu erhalten.

4. Verfahren nach Anspruch 3, wobei die Erhöhung der Drehzahl n_{T} mit abnehmender Streudichte so um so größer ist, je höher die Geschwindigkeit v ist.

5. Verfahren nach einem der Ansprüche 1 bis 4, wobei der Abwurfwinkel des Streuguts vom Streuteller bei im übrigen konstanter pro Zeiteinheit ausgestreuter Streumenge Q abhängig von der Drehzahl n_{T} verändert wird.

6. Verfahren nach einem der Ansprüche 1 bis 5, **dadurch gekennzeichnet, dass** bei sich ändernder Geschwindigkeit v und im übrigen konstanter Streudichte S_{D} und Streubreite b, also bei sich ändernder, pro Zeiteinheit ausgestreuter Streumenge Q, der Abwurfwinkel des Streuguts vom Streuteller abhängig von der Geschwindigkeit v verändert wird.

7. Verfahren nach Anspruch 5 oder 6, wobei die Änderung des Abwurfwinkels durch Verdrehen des den Streuteller und eine Zuführeinrichtung zum Zuführen des Streuguts zum Streuteller umfassenden Streukopfs erfolgt.

8. Verfahren nach einem der Ansprüche 5 bis 7, wobei die Änderung des Abwurfwinkels durch Verändern eines dem Streuteller mit dem Streugut zugeführten Flüssigkeitsanteils erfolgt.

9. Verfahren nach Anspruch 8, wobei der Flüssigkeitsanteil reduziert wird, wenn sich die Geschwindigkeit v erhöht.

10. Vorrichtung zur Verteilung von Streugut zur Erzeugung eines Streuteppichs, umfassend einen rotierenden Streuteller und eine Einrichtung zum Zuführen des Streuguts zum rotierenden Streuteller derart, dass das Streugut vom rotierenden Streuteller abgeschleudert wird, um bei einer Translationsbewegung mit der Translationsgeschwindigkeit v des Streutellers und bei einer Drehzahl n_{T} des Streutellers einen Streuteppich mit Streudichte s_{D} und Streubreite b erzeugen zu können, wobei mit zunehmender Geschwindigkeit v die dem Streuteller pro Zeiteinheit zugeführte Streumenge Q zur Aufrechterhaltung der Streudichte s_{D} erhöht wird, **gekennzeichnet durch** eine Steuerungseinrichtung, mittels welcher mit der zunehmenden Geschwindigkeit v auch die Drehzahl n_{T} des Streutellers in dem Maße erhöht wird, dass die Streubreite b aufrechterhalten bleibt.

11. Vorrichtung nach Anspruch 10, wobei die Erhöhung der Drehzahl n_{T} mit zunehmender Geschwindigkeit v um so geringer ist, je höher die Streudichte s_{D} ist.

12. Vorrichtung nach Anspruch 10 oder 11, **dadurch gekennzeichnet, dass** mit der Steuerungseinrichtung die Drehzahl n_{T} mit abnehmender Streudichte S_{D} bei im übrigen konstanter Geschwindigkeit v erhöht wird, um die Streubreite b aufrecht zu erhalten.

13. Vorrichtung nach Anspruch 12, wobei die Erhöhung der Drehzahl n_{T} mit abnehmender Streudichte s_{D} um so größer ist, je höher die Geschwindigkeit v ist.

14. Vorrichtung nach einem der Ansprüche 10 bis 13, wobei der Abwurfwinkel des Streuguts vom Streuteller mittels der Steuerungseinrichtung bei im übrigen konstanter pro Zeiteinheit ausgestreuter Streumenge Q abhängig von der Drehzahl n_{T} veränderbar ist.

15. Vorrichtung nach einem der Ansprüche 10 bis 14, **dadurch gekennzeichnet, dass** mit der Steuerungseinrichtung bei sich ändernder Geschwindigkeit v und im übrigen konstanter Streudichte S_{D} und Streubreite b, also bei sich ändernder pro Zeiteinheit ausgestreuter Streumenge Q, der Abwurfwinkel des Streuguts vom Streuteller abhängig von der Geschwindigkeit v verändert wird.

16. Vorrichtung nach Anspruch 14 oder 15, wobei die Änderung des Abwurfwinkels durch Verdrehen des den Streuteller und eine Streustoffzuführung zum Zuführen des Streustoffs zum Streuteller umfassenden Streukopfs erfolgt.

17. Vorrichtung nach einem der Ansprüche 14 bis 16, wobei die Änderung des Abwurfwinkels durch Verändern eines dem Streuteller mit dem Streugut zugeführten Flüssigkeitsanteils erfolgt.

18. Vorrichtung nach Anspruch 13, wobei der Flüssigkeitsanteil reduziert wird, wenn sich die Geschwindigkeit v bei unveränderter Streudichte S_{D} erhöht.

## Claims

1. A method for spreading grit material with the help of a spreading disc rotating with the rotational speed n_{T} and translatorily moved with the speed v for producing a grit carpet with spreading density s_{D} and spreading width b, wherein with increasing speed v the grit amount Q fed to the spreading disc per unit of time is increased for maintaining the spreading density s_{D}, **characterized in that** with the increasing speed v the rotational speed n_{T} of the spreading disc is also increased to such an extent that the spreading width b is maintained.

2. The method according to claim 1, wherein the increase of the rotational speed n_{T} with increasing speed v is the lower, the higher the spreading density s_{D}.

3. The method according to claim 1 or 2, **characterized in that** the rotational speed n_{T} with decreasing spreading density s_{D} at an otherwise constant speed v is increased, in order to maintain the spreading width b.

4. The method according to claim 3, wherein the increase of the rotational speed n_{T} with decreasing spreading density s_{D} is the higher, the higher the speed v.

5. The method according to any of claims 1 to 4, wherein the discharge angle of the grit material from the spreading disc at an otherwise constant grit amount Q spread per unit of time is changed dependent on the rotational speed n_{T}.

6. The method according to any of claims 1 to 5, **characterized in that** at a changing speed v and an otherwise constant spreading density s_{D} and spreading width b, i.e. with a changing grit amount Q spread per unit of time, the discharge angle of the grit material from the spreading disc is changed dependent on the speed v.

7. The method according to claim 5 or 6, wherein the change of the discharge angle is effected by turning the spreading head, said spreading head comprising the spreading disc and a feeding device for feeding the grit material to the spreading disc.

8. The method according to any of claims 5 to 7, wherein the change of the discharge angle is effected by changing a liquid proportion fed to the spreading disc with the grit material.

9. The method according to claim 8, wherein the liquid proportion is reduced, when the speed v is increased.

10. An apparatus for spreading grit material for producing a grit carpet comprising a rotating spreading disc and a device for feeding the grit material to the rotating spreading disc in such a way that the grit material is thrown off by the rotating spreading disc, in order to be able to produce, at a translatory motion with the translatory speed v of the spreading disc and at a rotational speed n_{T} of the spreading disc, a grit carpet with spreading density s_{D} and spreading width b, wherein with increasing speed v the grit amount Q fed to the spreading disc per unit of time is increased for maintaining the spreading density s_{D}, **characterized by** a control unit, with the help of which with the increasing speed v the rotational speed n_{T} of the spreading disc is also increased to such an extent that the spreading width b is maintained.

11. The apparatus according to claim 10, wherein the increase of the rotational speed n_{T} with increasing speed v is the lower, the higher the spreading density s_{D}.

12. The apparatus according to claim 10 or 11, **characterized in that** with the control unit the rotational speed n_{T} with decreasing spreading density S_{D} at an otherwise constant speed v is increased, in order to maintain the spreading width b.

13. The apparatus according to claim 12, wherein the increase of the rotational speed n_{T} with decreasing spreading density s_{D} is the larger, the higher the speed v.

14. The apparatus according to any of claims 10 to 13, wherein the discharge angle of the grit material from the spreading disc is changeable with the help of the control unit dependent on the rotational speed n_{T} at an otherwise constant grit amount Q spread per unit of time.

15. The apparatus according to any of claims 10 to 14, **characterized in that** with the control unit at a changing speed v and an otherwise constant spreading density s_{D} and spreading width b, i.e. with a changing grit amount Q spread per unit of time, the discharge angle of the grit material from the spreading disc is changed dependent on the speed v.

16. The apparatus according to claim 14 or 15, wherein the change of the discharge angle is effected by turning the spreading head, said spreading head comprising the spreading disc and a grit material feeding device for feeding the grit material to the spreading disc.

17. The apparatus according to any of claims 14 to 16, wherein the change of the discharge angle is effected by changing a liquid proportion fed to the spreading disc with the grit material.

18. The apparatus according to claim 13, wherein the liquid proportion is reduced, when the speed v at an unchanged spreading density S_{D} is increased.

## Revendications

1. Procédé d'épandage de produit d'épandage au moyen d'un plateau d'épandage tournant à la vitesse de rotation n_{τ} et déplacé en translation à la vitesse v, pour la réalisation d'un tapis d'épandage avec une densité d'épandage S_{D} et une largeur d'épandage b, dans lequel la quantité d'épandage Q amenée au plateau d'épandage par unité de temps augmente au fur et à mesure que la vitesse v s'élève, pour le maintien de la densité d'épandage S_{D}, **caractérisé en ce que**, au fur et à mesure que la vitesse v s'élève, la vitesse de rotation n_{τ} du plateau d'épandage augmente également dans une mesure telle que la largeur d'épandage b est conservée.

2. Procédé selon la revendication 1, dans lequel l'élévation de la vitesse de rotation n_{τ}, au fur et à mesure que la vitesse v augmente, est d'autant plus minime que la densité S_{D} est élevée.

3. Procédé selon la revendication 1 ou 2, **caractérisé en ce que** pour conserver la largeur d'épandage b, la vitesse de rotation n_{τ} augmente au fur et à mesure que la densité S_{D} diminue, pour une vitesse v par ailleurs constante.

4. Procédé selon la revendication 3, dans lequel l'élévation de la vitesse de rotation n_{τ}, au fur et à mesure que la densité d'épandage S_{D} diminue, est d'autant plus grande, que la vitesse v est élevée.

5. Procédé selon l'une des revendications 1 à 4, dans lequel l'angle d'éjection du produit d'épandage du plateau d'épandage, pour une quantité d'épandage Q par unité de temps par ailleurs constante, varie en fonction de la vitesse de rotation n_{T}.

6. Procédé selon l'une des revendications 1 à 5, **caractérisé en ce que** lorsque la vitesse v varie pour une densité d'épandage S_{D} et une largeur d'épandage b par ailleurs constantes, donc lorsque la quantité d'épandage Q épandue par unité de temps varie, l'angle d'éjection du produit d'épandage à partir du plateau d'épandage varie en fonction de la vitesse v.

7. Procédé selon la revendication 5 ou 6, dans lequel la variation de l'angle d'éjection s'effectue par la rotation de la tête d'épandage comprenant le plateau d'épandage et un dispositif d'alimentation destiné à amener le produit d'épandage vers le plateau d'épandage.

8. Procédé selon l'une des revendications 5 à 7, dans lequel la variation de l'angle d'éjection s'effectue en variant une proportion de liquide amenée au plateau d'épandage avec le produit d'épandage.

9. Procédé selon la revendication 8, dans lequel la proportion de liquide diminue lorsque la vitesse v augmente.

10. Dispositif d'épandage de produit d'épandage pour la réalisation d'un tapis d'épandage, comprenant un plateau d'épandage tournant et un dispositif pour amener le produit d'épandage au plateau d'épandage tournant, de telle façon que le produit d'épandage est éjecté par le plateau d'épandage tournant, pour pouvoir réaliser un tapis d'épandage d'une densité d'épandage S_{D} et d'une largeur d'épandage b, compte tenu d'un déplacement en translation à la vitesse de translation v du plateau d'épandage et pour une vitesse de rotation n_{τ} du plateau d'épandage, dans lequel la quantité d'épandage Q amenée au plateau d'épandage par unité de temps augmente au fur et à mesure que la vitesse v augmente, pour conserver la densité d'épandage S_{D}, **caractérisé par** un dispositif de commande au moyen duquel la vitesse de rotation n_{τ} du plateau d'épandage augmente également dans une mesure telle que la largeur d'épandage b est conservée.

11. Dispositif selon la revendication 10, dans lequel l'élévation de la vitesse de rotation n_{τ}, au fur et à mesure que la vitesse v augmente, est d'autant plus minime que la densité d'épandage S_{D} est élevée.

12. Dispositif selon la revendication 10 ou 11, **caractérisé en ce qu'**avec le dispositif de commande, la vitesse de rotation n_{τ} s'élève au fur et à mesure que la densité d'épandage S_{D} diminue, pour une vitesse v par ailleurs constante, afin de maintenir la largeur d'épandage b.

13. Dispositif selon la revendication 12, dans lequel l'élévation de la vitesse de rotation n_{τ}, au fur et à mesure que la densité d'épandage S_{D} diminue, est d'autant plus grande que la vitesse v est élevée.

14. Dispositif selon l'une des revendications 10 à 13, dans lequel l'angle d'éjection du produit d'épandage à partir du plateau d'épandage en fonction de la vitesse de rotation n_{τ}, peut varier au moyen du dispositif de commande, pour une quantité d'épandage Q par unité de temps par ailleurs constante.

15. Dispositif selon l'une des revendications 10 à 14, **caractérisé en ce qu'**avec le dispositif de commande, lorsque la vitesse v varie pour une densité d'épandage S_{D} et une largeur d'épandage b par ailleurs constantes, donc lorsque la quantité d'épandage Q épandue par unité de temps varie, l'angle d'éjection du produit d'épandage à partir du plateau d'épandage varie en fonction de la vitesse v.

16. Dispositif selon la revendication 14 ou 15, dans lequel la variation de l'angle d'éjection s'opère par la rotation de la tête d'épandage comprenant le plateau d'épandage et une alimentation de produit d'épandage destinée à amener le produit d'épandage au plateau d'épandage.

17. Dispositif selon l'une des revendications 14 à 16, dans lequel la variation de l'angle d'éjection s'effectue en modifiant une proportion de liquide amenée au plateau d'épandage avec le produit d'épandage.

18. Dispositif selon la revendication 13, dans lequel la proportion de liquide diminue lorsque la vitesse v augmente pour une densité d'épandage S_{D} inchangée.
